# EUROPÄISCHE PATENTSCHRIFT

(11) **EP 1 532 599 B1**
(45) Veröffentlichungstag und Bekanntmachung des Hinweises auf die Patenterteilung: **04.11.2009**
(21) Anmeldenummer: 03793694.5
(22) Anmeldetag: 06.08.2003
(51) Int. Cl.: G08C 17/02

(54) **VERFAHREN ZUM BETRIEB EINES SYSTEMS MIT EINER VIELZAHL KNOTEN UND EINER BASISSTATION,GEMÄSS TDMA UND SYSTEM HIERZU**
METHOD FOR OPERATING A SYSTEM COMPRISING A PLURALITY OF NODES AND A BASE STATION ACCORDING TO TDMA, AND ASSOCIATED SYSTEM
PROCEDE PERMETTANT DE FAIRE FONCTIONNER UN SYSTEME POURVU D'UNE PLURALITE DE NOEUDS ET D'UNE STATION DE BASE SELON AMRT ET SYSTEME ASSOCIE

(30) Priorität: 17.08.2002 DE 10237799; 29.07.2003 DE 10334873
(43) Veröffentlichungstag der Anmeldung: 25.05.2005
(73) Patentinhaber: ABB Research Ltd., 8050 Zürich (CH)
(72) Erfinder: APNESETH, Christoffer, N-0559 Oslo (NO); VEFLING, Harald, N-3140 Borgheim (NO); ENDRESEN, Jan, N-1385 Asker (NO); DZUNG, Dacfey, CH-5430 Wettingen (CH)
(74) Vertreter: Miller, Toivo
(86) Internationale Anmeldenummer: PCT/EP2003/008691
(87) Internationale Veröffentlichungsnummer: WO 2004/023419

(56) Entgegenhaltungen:
- EP-A- 1 022 674
- US-A- 4 614 945
- US-A- 5 748 103

## Beschreibung

Die Erfindung bezieht sich auf ein Verfahren zum Betrieb eines Systems gemäß TDMA (Time Division Multiple Access) mit einer Vielzahl drahtloser Sensoren und Aktoren als Knoten und einer Basisstation, welches in einer Maschine oder Anlage, wie Industrieroboter, Herstellungsautomat oder Fertigungsautomat installiert ist, wobei zyklische TDMA-Datenübertragungsblöcke übertragen werden und sich jeder TDMA-Datenübertragungsblock aus sukzessive nacheinander folgenden Zeitschlitzen zusammensetzt, wobei jeder Zeitschlitz einem bestimmten Knoten zugeordnet ist. Die Erfindung bezieht sich des weiteren auf ein System hierzu.

Als Sensoren bzw. Aktoren können Näherungsschalter/Näherungssensoren, Temperaturmesssensoren, Druckmesssensoren, Strommesssensoren oder Spannungsmesssensoren bzw. mikromechanische, piezoelektrische, elektrochemische, magnetostriktive, elektrostatische oder elektromagnetische Aktoren verwendet werden.

In der DE 199 26 799 A1 wird ein System für eine eine Vielzahl von drahtlosen Näherungssensoren aufweisende Maschine, insbesondere Fertigungsautomat, vorgeschlagen, wobei
- jeder Näherungssensor mindestens eine zur Energieaufnahme aus einem mittelfrequenten Magnetfeld geeignete Sekundärwicklung aufweist,
- wobei mindestens eine von einem mittelfrequenten Oszillator gespeiste Primärwicklung zur drahtlosen Versorgung der Näherungssensoren mit elektrischer Energie vorgesehen ist,
- und wobei jeder Näherungssensor mit einer Sendeeinrichtung ausgestattet ist, welche interessierende Sensor-Informationen beinhaltende Funksignale an eine zentrale, mit einem Prozessrechner der Maschine verbundene Basisstation abgibt.

Bei diesem drahtlosen System entfällt im Vergleich zu konventionellen Lösungen mit Draht/Kabelanschluss zur elektrischen Energieversorgung und zur Kommunikation der durch Planung, Material, Installation, Dokumentation und Wartung bedingte relativ hohe Kostenfaktor der Draht/Kabelanschlüsse. Es können keine Ausfälle aufgrund von Kabelbrüchen oder schlechten, beispielsweise korrodierten Kontakten auftreten.

In der DE 199 26 562 A1 werden ein Verfahren und eine Anordnung zur drahtlosen Versorgung einer Vielzahl Aktoren mit elektrischer Energie, ein Aktor und eine Primärwicklung hierzu sowie ein System für eine eine Vielzahl von Aktoren aufweisende Maschine vorgeschlagen, wobei die vorgeschlagene Technologie bezüglich Energieversorgung und Kommunikation gleichartig der vorstehend für die DE 199 26 799 A1 angegebenen Technologie ist.

Für die Funkübertragung wird dabei vorzugsweise die TDMA-Technologie (Time Division Multiple Access) eingesetzt, bei der die Signale (Informationen) von der Basisstation zu den Aktoren bzw. Sensoren (Knoten) als downlink Signale und von den Aktoren bzw. Sensoren (Knoten) zur Basisstation als uplink Signale jeweils in Form zyklischer TDMA-Datenübertragungsblöcke übermittelt werden, wobei jedem Sensor/Aktor (Knoten) ein bestimmter Zeitschlitz innerhalb eines Datenübertragungsblockes zugeordnet ist. Beim Stand der Technik wird die Anzahl mit einer Basisstation kommunikationsfähiger Knoten (Sensoren/Aktoren) durch die Anzahl der Zeitschlitze eines Datenübertragungsblockes festgelegt und damit begrenzt.

Der Erfindung liegt die Aufgabe zugrunde, ein Verfahren zum Betrieb eines Systems mit einer Vielzahl Knoten und einer Basisstation gemäß TDMA der eingangs genannten Art anzugeben, bei dem die Anzahl der mit der Basisstation kommunikationsfähigen Knoten erhöht ist. Des weiteren soll ein System hierzu angegeben werden.

Die Aufgabe wird hinsichtlich des Verfahrens in Verbindung mit den Merkmalen des Oberbegriffes des Anspruchs 1 erfindungsgemäß dadurch gelöst, dass die uplink Signale von den unterschiedlichen Knoten zu der Basisstation gleichzeitig auf zwei, drei oder mehr unterschiedlichen Frequenzen gesendet werden können, während die downlink Signale von der Basisstation zu den unterschiedlichen Knoten auf lediglich einer, von den uplink Frequenzen unterschiedlichen Frequenz gesendet werden, wobei die Zeitschlitze und die unterschiedlichen uplink Frequenzen der unterschiedlichen Knoten einmal festgelegt und danach beibehalten werden.

Die Aufgabe wird hinsichtlich des Systems mit einer Basisstation und einer Vielzahl Knoten dadurch gelöst, dass die uplink Signale von den unterschiedlichen Knoten zu der Basisstation gleichzeitig auf zwei, drei oder mehr unterschiedlichen Frequenzen gesendet werden können, während die downlink Signale von der Basisstation zu den unterschiedlichen Knoten auf lediglich einer, von den uplink Frequenzen unterschiedlichen Frequenz gesendet werden, wobei die Zeitschlitze und die unterschiedlichen uplink Frequenzen der unterschiedlichen Knoten einmal festgelegt und danach beibehalten werden.

Die mit der Erfindung erzielbaren Vorteile bestehen insbesondere darin, dass die Kapazität des Systems mit einer Vielzahl von Knoten und einer Basisstation vergrößert wird, d. h. die Anzahl der möglichen, mit einer Basisstation kommunikationsfähigen Knoten wird bei Verwendung von zwei unterschiedlichen uplink Frequenzen verdoppelt, bei Verwendung von drei unterschiedlichen uplink Frequenzen verdreifacht usw. Der Einsatz zusätzlicher, mit eigenen downlink Frequenzen zu betreibender Basisstationen wird vermieden, wodurch zum einen vorteilhaft durch mehrere downlink Frequenzen verursachte Interferenzen verhindert werden, welche im allgemeinen bei Systemen mit mehreren Basisstationen auftreten und was zum anderen vorteilhaft Kosteneinsparungen zur Folge hat.

Weitere Vorteile sind aus der nachstehenden Beschreibung ersichtlich.

Vorteilhafte Ausgestaltungen der Erfindung sind in den Unteransprüchen gekennzeichnet.

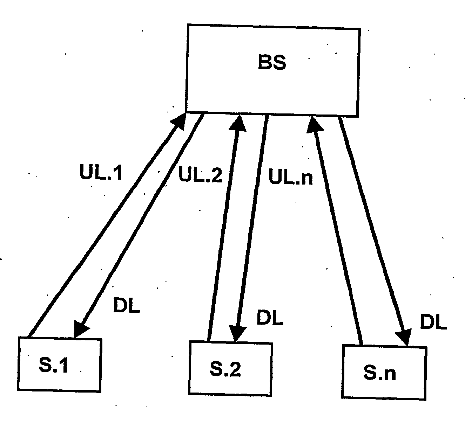

Die Erfindung wird nachstehend anhand des in der Zeichnung dargestellten Ausführungsbeispieles erläutert. In der einzigen Figur ist ein System mit einer Vielzahl von Knoten S.1, S.2...S.n (n = beliebige ganze positive Zahl), vorzugsweise Sensoren und/oder Aktoren (Knoten) und einer Basisstation BS dargestellt. Die Sensoren und/oder Aktoren S.1, S.2...S.n sind beispielsweise innerhalb einer Anlage installiert oder an einer Maschine, insbesondere einem Fertigungsautomat befestigt. Es ist nachfolgend stets von Sensoren/Aktoren S.1...S.n die Rede, wobei es sich beim einzelnen Bauteil wahlweise um einen Sensor oder um einen Aktor handeln kann. Im allgemeinen weisen die Sensoren einen die Sensor-Umgebung detektierenden Sensorkopf mit nachgeschalteter Signalauswertung sowie die Aktoren eine Aktoreinheit (beispielsweise ein Druckluftventil oder ein Schütz) sowie eine Ansteuereinheit hierfür auf.

Die Sensoren und/oder Aktoren S.1...S.n weisen jeweils eine Kommunikationseinrichtung auf, welche den erforderlichen Funksender und Funkempfänger enthält, um derart eine drahtlose Kommunikation zwischen der Basisstation BS und den einzelnen Sensoren/Aktoren S.1...S.n zu ermöglichen. Bei einem Sensor gelangt das aufbereitete Sensorsignal zu einem Modulator/Codierer mit nachgeschaltetem Funksender und Antenne, wo es an die Basisstation BS gesendet wird. Bei einem Aktor gelangt das von der Basisstation BS gesendete Ansteuersignal über eine Antenne, einen Funkempfänger und einen Demodulator/Decodierer zur Ansteuereinheit.

Die Basisstation BS ist zweckmäßig an einen Zentralrechner (Prozessrechner, Speicherprogrammierbare Steuerung) angeschlossen und weist eine Kommunikationseinrichtung auf, welche Sensorsignale der Sensoren und Meldesignale betreffend den aktuellen Zustand von Aktoren in Form von uplink Signalen UL,1, UL.2...UL.n (uplink = "in Aufwärtsrichtung" = von den Sensoren/Aktoren zur Basisstation) empfängt, Ansteuersignale zur Aktivierung/Deaktivierung der Aktoren in Form von downlink Signalen DL (downlink = "in Abwärtsrichtung" = von der Basisstation zu den Sensoren/Aktoren) abgibt und Signale zur Einstellung von spezifischen Parametern der Aktoren und Sensoren ebenfalls in Form von downlink Signalen DL abgibt. Die Kommunikationseinrichtung der Basisstation BS weist zumindest eine Antenne auf, an welche ein Funkempfänger und ein Funksender angeschlossen sind. Die Signale des Funkempfängers werden einem Demodulator/Decodierer zugeführt und dem Funksender ist ein Modulator/Codierer vorgeschaltet.

Beim TDMA-Verfahren sendet die Basisstation BS zur kontinuierlichen Signalübertragung eine Folge von sukzessive aufeinanderfolgenden TDMA-Datenübertragungsblöcken bzw. Rahmen in Abwärtsrichtung aus, die von jedem Sensor/Aktor S.1...S.n empfangen werden können. Ein zyklischer TDMA-Datenübertragungsblock oder Rahmen setzt sich aus m (m = beliebige ganze Zahl) sukzessive nacheinander folgenden Zeitschlitzen zusammen. Jeder Zeitschlitz ist einem bestimmten Sensor oder Aktor S.1...S.n zugeordnet.

Um sicherzustellen, dass die in einem Zeitschlitz enthaltene Information auch dem richtigen Aktor zugeordnet wird, bzw. um sicherzustellen, dass ein Sensor die der Basisstation BS zu übermittelnde Information während des richtigen Zeitschlitzes absendet, enthält jeder Zeitschlitz ein typisches Synchronisationswort zur exakten Synchronisation zwischen Basisstation BS einerseits und Sensoren/Aktoren S.1...S.n andererseits. Ein Zeitschlitz eines TDMA-Datenübertragungsblocks setzt sich zusammen aus einer Synchronisations-Präambel, aus der Symbolfolge der eigentlichen Nachricht (Payload) und aus einem Sicherheitsabstand (Guard Time). Die Synchronisations-Präambel enthält die zur Synchronisierung zwischen Funkempfänger und Funksender erforderlichen Angaben.

Obwohl beispielsweise die Sensoren ihre Nachrichten in zufälligen Augenblicken generieren, erfolgt eine an den zugeordneten Zeitschlitz angepasste Übertragung der Daten. Ein Sensor/Aktor S.1...S.n sendet seinen Datenübertragungsblock in Aufwärtsrichtung (uplink Signal) nach Ablauf einer festen Zeitspanne, nachdem er die Information im zugehörigen Zeitschlitz in Abwärtsrichtung (downlink Signal) empfangen hat.

Der Empfänger der Basisstation BS kann aus der jedem Zeitschlitz zugeordneten Nummer und Frequenz unverwechselbar den jeweiligen Funksender, d. h. den relevanten Sensor/Aktor (Knoten) S.1...S.n bestimmen.

Wesentliches Kriterium der Erfindung ist es, dass die uplink Signale UL.1, UL.2...UL.n von den unterschiedlichen Sensoren/Aktoren S.1...S.n gleichzeitig auf zwei, drei oder mehr unterschiedlichen Frequenzen gesendet werden, d. h. während eines uplink Zeitschlitzes werden gleichzeitig auf zwei, drei oder mehr unterschiedlichen Frequenzen die Daten von unterschiedlichen Sensoren/Aktoren S.1...S.n gesendet. Ein Ausführungsbeispiel hierzu:
- Knoten S.1 sendet während des ersten Zeitschlitzes eines Datenübertragungsblockes auf der Frequenz f1,
- Knoten S.2 sendet während des ersten Zeitschlitzes eines Datenübertragungsblockes auf der Frequenz f2
- Knoten S.3 sendet während des ersten Zeitschlitzes eines Datenübertragungsblockes auf der Frequenz f3,
- Knoten S.4 sendet während des zweiten Zeitschlitzes eines Datenübertragungsblockes auf der Frequenz f1,
- Knoten S.5 sendet während des zweiten Zeitschlitzes eines Datenübertragungsblockes auf der Frequenz f2,
- Knoten S.6 sendet während des zweiten Zeitschlitzes eines Datenübertragungsblockes auf der Frequenz f3,
- Knoten S.7 sendet während des dritten Zeitschlitzes eines Datenübertragungsblockes auf der Frequenz f1,
- Knoten S.8 sendet während des dritten Zeitschlitzes eines Datenübertragungsblockes auf der Frequenz f2,
- Knoten S.9 sendet während des dritten Zeitschlitzes eines Datenübertragungsblockes auf der Frequenz f3,
- Knoten S.10 sendet während des vierten Zeitschlitzes eines Datenübertragungsblockes auf der Frequenz f1,
- Knoten S.11 sendet während des vierten Zeitschlitzes eines Datenübertragungsblockes auf der Frequenz f2 usw.

Die downlink Signale DL werden im Unterschied hierzu auf lediglich einer einzigen Frequenz gesendet, d. h. während eines jeden downlink Zeitschlitzes werden die Daten an zwei, drei oder mehr Sensoren/Aktoren S.1...S.n gleichzeitig gesendet, was durch geeignetes Packen der Daten erfolgt. Diese Verfahrensweise hat den Vorteil, dass insgesamt weniger Frequenzen durch das System belegt werden.

Die Funktionsweise der Basisstation BS ermöglicht dementsprechend den gleichzeitigen Empfang von zwei, drei oder mehr unterschiedlichen Frequenzen entsprechend den Frequenzen der uplink Signale. Im einfachsten Fall bedeutet dies, dass zwei, drei oder mehr separate Empfänger - jeweils zum Empfang einer festen Frequenz eingestellt - vorgesehen sind. Jeder Empfänger kann eine eigene Empfangsantenne aufweisen. Alternativ kann eine gemeinsame Empfangsantenne für alle Empfänger vorgesehen sein. Des weiteren ist es realisierbar, dass bestimmte analoge und/oder digitale Baukomponenten gemeinsam für alle Empfangsfrequenzen vorgesehen sind, während andere Baukomponenten empfangsfrequenzspezifisch ausgebildet sind.

Selbstverständlich werden die uplink Signale nur dann gebildet und gesendet, wenn die entsprechenden Knoten entsprechende Informationen, beispielsweise Sensor-Daten oder Empfangsbestätigungen, zu senden haben, d. h. es ist selbstverständlich nicht zwingend erforderlich, dass jeder Knoten während eines jeden ihm zugeordneten Zeitschlitzes sendet.

Die uplink Zeitschlitze werden frequenz-orthogonal (einander nicht beeinflussend, nicht überlappend) benutzt, d. h. die unterschiedlichen uplink Frequenzen der unterschiedlichen Sensoren/Aktoren werden derart festgelegt, dass Interferenzen innerhalb des Systems möglichst vermieden werden. Ebenso ist die downlink Frequenz orthogonal zu den verwendeten uplink Frequenzen.

Dabei werden die Zeitschlitze und die unterschiedlichen uplink Frequenzen der unterschiedlichen Knoten einmal - während der Konfiguration des Systems - festgelegt und danach beibehalten.

Aufbauend auf den und unter Beachtung der vorstehenden Erläuterungen ist es auch möglich, das aus einer Basisstation und einer Vielzahl Knoten bestehende System sowohl für die uplink Signale als auch für die downlink Signale nach dem Frequency Hopping Verfahren zu betreiben, um derart die Qualität der drahtlosen Kommunikation zu erhöhen.

Frequency Hopping FH ist ein bekanntes Verfahren auf dem Gebiet der drahtlosen Kommunikation, um frequenz-selektivem Fading und Interferenzen entgegenzuwirken. Die Übertragungsfrequenz (Trägerfrequenz) springt dabei über einem weiten Frequenzband gemäß einer festgelegten Sprung-Frequenzfolge (Frequency Hopping Frequenzfolge), welche sowohl dem Sender als auch dem Empfänger bekannt ist. Für Übertragungskanäle mit frequenzabhängigen Übertragungsbedingungen und relativ hohen Fehlerraten kann mittels Frequency Hopping sichergestellt werden, dass eine Übertragung mit ausreichender Qualität und ausreichend niedriger Fehlerrate erfolgt. In Verbindung mit Fehlerüberwachungsverfahren - wie beispielsweise FEC (Forward Error Correction) oder ARQ (Automatic Repeat Request) - ist vielfach mittels eines Frequency Hopping Systems eine zuverlässige Kommunikation erzielbar.

Die Grundlagen des Frequency Hopping sind beispielsweise aus J. G. Proakis, Digital Communications, McGraw Hill, 1983, Section 8.3, pp. 580 - 587 bekannt.

Des weiteren wird auf das Fachbuch K. Dostert, Powerline Kommunikation, Francis Verlag GmbH Poing, 2000, Seiten 116-123 hingewiesen.

Der Wechsel der gemäß der Frequency Hopping Frequenzfolge festgelegten Frequenzen erfolgt dabei vorzugsweise rahmenweise. Die Erzeugung der Frequency Hopping Frequenzfolge erfolgt beispielsweise auf Basis der Taktgebersignale der Basisstation, welche den Knoten mittels der downlink Signale zugeleitet werden.

Die Frequency Hopping Frequenzfolgen sind dabei vorteilhaft derart festgelegt,
- dass die uplink Frequenzen und die downlink Frequenzen das gleiche Gesamt-Frequenzband benutzen,
- dass die Frequenzfolgen nur geringe Korrelation aufweisen,
- dass alle Frequenzen des zugewiesenen Frequenzbandes verwendet werden,
- dass unmittelbar aufeinanderfolgende Frequenzsprünge einen möglichst weiten Abstand aufweisen,
- dass die unterschiedlichen, gleichzeitig auftretenden uplink Frequenzen sowie die gleichzeitig auftretende downlink Frequenz keine Interferenzen verursachen.

Es ist dabei jedoch nicht zwingend erforderlich, dass die Frequency Hopping Frequenzfolgen alle vorstehend angeführten Kriterien erfüllen.

## Patentansprüche

1. Verfahren zum Betrieb eines Systems gemäß Time Division Multiple Access TDMA mit einer Anzahl n, wobei n eine beliebige ganze positive Zahl ist, drahtloser Sensoren und Aktoren als Knoten (S.1...S.n) und einer Basisstation (BS), welches in einer Maschine oder Anlage, wie Industrieroboter, Herstellungsautomat oder Fertigungsautomat installiert ist,
a) wobei die Sensoren einen die Sensor-Umgebung detektierenden Sensorkopf mit nachgeschalteter Signalauswertung sowie die Aktoren eine Aktoreinheit sowie eine Ansteuereinheit hierfür aufweisen,
b) wobei zwischen der Basisstation und den Knoten sowie zwischen den Knoten und der Basisstation zyklische TDMA-Datenübertragungsblöcke übertragen werden und sich jeder TDMA-Datenübertragungsblock aus sukzessive nacheinander folgenden Zeitschlitzen zusammensetzt,
c) wobei jeder Zeitschlitz einem bestimmten Knoten zugeordnet ist,
d) wobei die Basisstation (BS) Sensorsignale der Sensoren und Meldesignale betreffend den aktuellen Zustand von Aktoren in Form von uplink Signalen empfängt,
e) wobei die uplink Signale (UL.1...UL.n) von den unterschiedlichen Knoten (S.1...S.n) zu der Basisstation (BS) gleichzeitig auf zwei, drei oder mehr unterschiedlichen Frequenzen (f1, f2, f3) gesendet werden,
f) wobei als downlink Signale (DL) Ansteuersignale zur Aktivierung / Deaktivierung der Aktoren und Signale zur Einstellung von spezifischen Parametern der Aktoren und Sensoren abgegeben werden,
g) wobei die downlink Signale (DL) von der Basisstation (BSA) zu den unterschiedlichen Knoten (S.1...S.n) auf lediglich einer, von den uplink Frequenzen unterschiedlichen Frequenz gesendet werden,
h) wobei die Zeitschlitze und die unterschiedlichen uplink Frequenzen der unterschiedlichen Knoten einmal festgelegt und danach beibehalten werden.
i) so dass die Basisstation aus der jedem Zeitschlitz zugeordneten Nummer und Frequenz unverwechselbar den relevanten Knoten bestimmen kann.

2. Verfahren nach Anspruch 1, **dadurch gekennzeichnet, dass** die unterschiedlichen uplink Frequenzen der unterschiedlichen Sensoren und / oder Aktoren (S.1...S.n) und die downlink Frequenz derart festgelegt werden, dass Interferenzen möglichst vermieden werden.

3. Verfahren nach Anspruch 1 und/oder 2, **dadurch gekennzeichnet, dass** das Frequency Hopping Verfahren verwendet wird.

4. System mit einer Anzahl n, wobei n eine beliebige ganze positive Zahl ist, drahtloser Sensoren und Aktoren als Knoten (S.1...S.n) und einer Basisstation (BS), welches in einer Maschine oder Anlage, wie Industrieroboter, Herstellungsautomat oder Fertigungsautomat installiert ist,
a) wobei die Sensoren einen die Sensor-Umgebung detektierenden Sensorkopf mit nachgeschalteter Signalauswertung sowie die Aktoren eine Aktoreinheit sowie eine Ansteuereinheit hierfür aufweisen,
b) wobei zwischen der Basisstation und den Knoten sowie zwischen den Knoten und der Basisstation zyklische TDMA-Datenübertragungsblöcke übertragen werden und sich jeder TDMA-Datenübertragungsblock aus sukzessive nacheinander folgenden Zeitschlitzen zusammensetzt,
c) wobei jeder Zeitschlitz einem bestimmten Knoten zugeordnet ist,
d) wobei die Basisstation (BS) Sensorsignale der Sensoren und Meldesignale betreffend den aktuellen Zustand von Aktoren in Form von uplink Signalen empfängt,
e) wobei die uplink Signale (UL.1...UL.n) von den unterschiedlichen Knoten (S.1...S.n) zu der Basisstation (BS) gleichzeitig auf zwei, drei oder mehr unterschiedlichen Frequenzen (f1, f2, f3) gesendet werden,
f) wobei als downlink Signale (DL) Ansteuersignale zur Aktivierung / Deaktivierung der Aktoren und Signale zur Einstellung von spezifischen Parametern der Aktoren und Sensoren abgegeben werden,
g) wobei die downlink Signale (DL) von der Basisstation (BSA) zu den unterschiedlichen Knoten (S.1...S.n) auf lediglich einer, von den uplink Frequenzen unterschiedlichen Frequenz gesendet werden,
h) wobei die Zeitschlitze und die unterschiedlichen uplink Frequenzen der unterschiedlichen Knoten einmal festgelegt und danach beibehalten werden,
i) so dass die Basisstation aus der jedem Zeitschlitz zugeordneten Nummer und Frequenz unverwechselbar den relevanten Knoten bestimmen kann.

## Claims

1. A method for operating a system according to Time Division Multiple Access (TDMA) with a number n, with n being a random integral positive number, wireless sensors and actuators as nodes (S.1 .... S.n) and a base station (BS) which is installed in a machine or installation such as an industrial robot, automatic manufacturing or production machine;
a) with the sensors comprising a sensor head which detects the ambient sensor environment and comprises signal evaluation in outgoing circuit, and the actuators comprising an actuator unit and a triggering unit for this purpose;
b) with cyclic TDMA data transmission blocks being transmitted between the base station and the nodes and between the nodes and the base station, and each TDMA data transmission block being composed of time slots which follow one another successively;
c) with each time slot being assigned to a specific node;
d) with the base station (BS) receiving sensor signals of the sensors and status signals concerning the current state of actuators in the form of uplink signals;
e) with the uplink signals (UL.1 .... UL.n) being transmitted by the different nodes (S.1 .... S.n) to the base station (BS) on two, three or more different frequencies (f1, f2, f3) simultaneously;
f) with trigger signals being output as downlink signals (DL) for activating / deactivating the actuators and signals for setting specific parameters of the actuators and sensors;
g) with the downlink signals (DL) being transmitted from the base station (BSA) to the different nodes (S.1 .... S.n) on merely one frequency which is different from the uplink frequencies;
h) with the time slots and the different uplink frequencies of the different nodes being determined once and being maintained thereafter;
i) so that the base station can determine the relevant node in an unmistakable manner from each number and frequency assigned to each time slot.

2. A method according to claim 1, **characterized in that** the different uplink frequencies of the different sensors and/or actuators (S.1 .... S.n) and the downlink frequencies are determined in such a way that interferences are avoided to the highest possible extent.

3. A method according to claim 1 and/or 2, **characterized in that** the frequency-hopping process is used.

4. A system with a number n, with n being a random integral positive number, wireless sensors and actuators as nodes (S.1 .... S.n) and a base station (BS) which is installed in a machine or installation such as an industrial robot, automatic manufacturing or production machine;
a) with the sensors comprising a sensor head which detects the ambient sensor environment and comprises signal evaluation in outgoing circuit, and the actuators comprising an actuator unit and a triggering unit for this purpose;
b) with cyclic TDMA data transmission blocks being transmitted between the base station and the nodes and between the nodes and the base station, and each TDMA data transmission block being composed of time slots which follow one another successively;
c) with each time slot being assigned to a specific node;
d) with the base station (BS) receiving sensor signals of the sensors and status signals concerning the current state of actuators in the form of uplink signals;
e) with the uplink signals (UL.1 .... UL.n) being transmitted by the different nodes (S.1 .... S.n) to the base station (BS) on two, three or more different frequencies (f1, f2, f3) simultaneously;
f) with trigger signals being output as downlink signals (DL) for activating / deactivating the actuators and signals for setting specific parameters of the actuators and sensors;
g) with the downlink signals (DL) being transmitted from the base station (BSA) to the different nodes (S.1 .... S.n) on merely one frequency which is different from the uplink frequencies;
h) with the time slots and the different uplink frequencies of the different nodes being determined once and being maintained thereafter;
i) so that the base station can determine the relevant node in an unmistakable manner from each number and frequency assigned to each time slot.

## Revendications

1. Procédé d'exploitation d'un système en accès TDMA (Time Division Multiple Access (TDMA) avec un nombre n, n étant un nombre entier positif quelconque, de capteurs et d'actionneurs sans fil faisant office de noeuds (S.1...S.n) et une station de base (BS), qui est installé dans une machine ou une installation telle qu'un robot industriel,un automate de fabrication ou un automate d'usinage,
a) dans lequel les capteurs comportent une tête de capteur détectant l'environnement du capteur avec une analyse de signal en aval et les actionneurs comportent une unité d'actionneur ainsi qu'une unité d'actionnement pour celle-ci,
b) dans lequel des blocs de transmission TDMA cycliques sont transmis entre la station de base et les noeuds et entre les noeuds et la station de base et chaque bloc de transmission TDMA se compose de tranches de temps se faisant suite successivement,
c) dans lequel chaque tranche de temps est associée à un noeud donné,
d) dans lequel la station de base (BS) reçoit des signaux de capteurs des capteurs et des signaux de signalisation concernant l'état actuel des actionneurs sous la forme de signaux de liaison montante,
e) dans lequel les signaux de liaison montante (UL.1...UL.n) sont envoyés par les différents noeuds (S.1...S.n) à la station de base (BS) simultanément sur deux ou trois fréquences différentes ou plus (f1,f2, f3),
f) dans lequel sont émis comme signaux de liaison descendante (DL) des signaux d'actionnement pour l'activation et la désactivation des actionneurs et des signaux pour le réglage de paramètres spécifiques des actionneurs et des capteurs,
g) dans lequel les signaux de liaison descendante (DL) sont envoyés par la station de base (BSA) aux différents noeuds (S.1...S.n) sur une seule fréquence différente des fréquences,
h) dans lequel les tranches de temps et les différentes fréquences de liaison montante des différents noeuds sont définies une fois et sont ensuite conservées,
i) de sorte que la station de base peut déterminer le noeud concerné sans risque de confusion à partir du numéro et de la fréquence attribués à chaque tranche de temps.

2. Procédé selon la revendication 1, **caractérisé en ce que** les différentes fréquences de liaison montante des différents capteurs et/ou actionneurs (S.1...S.n) et la fréquence de liaison descendante sont définies de façon à éviter autant que possible les interférences.

3. Procédé selon la revendication 1 et/ou 2, **caractérisé en ce que** le procédé de sauts de fréquence est employé.

4. Système comportant un nombre n, n étant un nombre entier positif quelconque, de capteurs et d'actionneurs sans fil faisant office de noeuds (S.1...S.n) et une station de base (BS), qui est installé dans une machine ou une installation telle qu'un robot industriel, un automate de fabrication ou un automate d'usinage,
a) dans lequel les capteurs comportent une tête de capteur détectant l'environnement du capteur avec une analyse de signal en aval et les actionneurs comportent une unité d'actionneur ainsi qu'une unité d'actionnement pour celle-ci,
b) dans lequel des blocs de transmission TDMA cycliques sont transmis entre la station de base et les noeuds et entre les noeuds et la station de base et chaque bloc de transmission TDMA se compose de tranches de temps se faisant suite successivement,
c) dans lequel chaque tranche de temps est associée à un noeud donné,
d) dans lequel la station de base (BS) reçoit des signaux de capteurs des capteurs et des signaux de signalisation concernant l'état actuel des actionneurs sous la forme de signaux de liaison montante,
e) dans lequel les signaux de liaison montante (UL.1...UL.n) sont envoyés par les différents noeuds (S.1...S.n) à la station de base (BS) simultanément sur deux ou trois fréquences différentes ou plus (f1,f2,f3),
f) dans lequel sont émis comme signaux de liaison descendante (DL) des signaux d'actionnement pour l'activation et la désactivation des actionneurs et des signaux pour le réglage de paramètres spécifiques des actionneurs et des capteurs,
g) dans lequel les signaux de liaison descendante (DL) sont envoyés par la station de base (BSA) aux différents noeuds (S.1...S.n) sur une seule fréquence différente des fréquences,
h) dans lequel les tranches de temps et les différentes fréquences de liaison montante des différents noeuds sont définies une fois et sont ensuite conservées,
i) de sorte que la station de base peut déterminer le noeud concerné sans risque de confusion à partir du numéro et de la fréquence attribués à chaque tranche de temps.
